# EUROPÄISCHE PATENTANMELDUNG

(11) **EP 1 724 288 A1**
(43) Veröffentlichungstag der Anmeldung: **22.11.2006**
(21) Anmeldenummer: 06008781.4
(22) Anmeldetag: 27.04.2006
(51) Int. Cl.: C08F 2/18, C08F 8/28, C08F 216/06, C09D 129/00, B32B 17/10

(54) **Verfahren zur Herstellung von kationischen Polyvinylacetalen**

(30) Priorität: 18.05.2005 DE 102005022853
(71) Anmelder: Wacker Polymer Systems GmbH & Co. KG, 84489 Burghausen (DE)
(72) Erfinder: Hashemzadeh, Abdulmajid, Dr., 84508 Burgkirchen (DE); Glaser, Bernhard, Dr., 85457 Wörth (DE)
(74) Vertreter: Schuderer, Michael

(57) **Zusammenfassung**

Gegenstand der Erfindung ist ein Verfahren zur Herstellung von kationischen Polyvinylacetalen mittels Copolymerisation von einem oder mehreren kationischen Monomeren aus der Gruppe umfassend N-Alkyldiallylammoniumsalze mit einem oder mehreren Vinylestern von unverzweigten oder verzweigten Carbonsäuren mit 1 bis 15 C-Atomen, Verseifung der damit erhaltenen Copolymerisate zu Copolymerisaten mit ≥ 50 Mol-% Vinylalkohol-Einheiten, und Acetalisierung der Vinylalkohol-Einheiten mit einem oder mehreren aliphatischen Aldehyden mit 1 bis 15 C-Atomen oder deren Halbacetale und Vollacetale, dadurch gekennzeichnet, dass die Copolymerisation in einem Gemisch aus Wasser und einwertigem, aliphatischem Alkohol mit einem Wasseranteil von 2 bis 35 Gew.-% durchgeführt wird.

## Beschreibung

Die Erfindung betrifft ein Verfahren zur Herstellung von kationischen Polyvinylacetalen, die damit erhältlichen Verfahrensprodukte sowie deren Verwendung.

Die Herstellung von Polyvinylacetalen aus den entsprechenden Polyvinylalkoholen durch polymeranaloge Umsetzung mit den entsprechenden Aldehyden ist bereits seit 1924 bekannt, wobei in der Folgezeit eine Vielzahl von Aldehyden zur Herstellung der entsprechenden Polyvinylacetale eingesetzt worden sind. Polyvinylacetale werden in einem 3-Stufenprozess (Polyvinylacetat -> Polyvinylalkohol -> Polyvinylacetal) hergestellt, wobei Produkte resultieren, welche neben Vinylacetalgruppen noch Vinylalkohol- und Vinylacetat-Einheiten enthalten. Kommerzielle Bedeutung haben vor allem Polyvinylformal, Polyvinylacetacetal und Polyvinylbutyral erlangt.

In vielen Anwendungen ist die Haftung der Polyvinylacetal-Filme auf den jeweiligen Substraten nicht ausreichend. Zur Verbesserung der Haftung, beispielsweise von Lacken, wird Polyethylenimin zugegeben, was den Nachteil hat, dass dieses schlecht verträglich mit Nitrocellulose, einem gebräuchlichen Lösemittel für Lacke ist.

Es bestand daher die Aufgabe, Polyvinylacetal so zu modifizieren, dass die Adhäsion des Films verbessert wird und thixotrope Effekte in Lösung vermieden werden. Diese Aufgabe konnte mit kationisch modifizierten Polyvinylacetalen gelöst werden.

Kationische Polyvinylacetale werden in einer Vielzahl von Anwendungen eingesetzt. In der JP-A 57-077051 wird der Einsatz von kationischem Polyvinylbutyral als Zwischenschicht für Sicherheitsglas beschrieben. Die kationischen Gruppen werden dabei durch Copolymerisation von Trimethyl-(3-acrylamido-3,3-dimethylpropyl)-ammoniumchlorid eingeführt. Die JP-A 06-279539 beschreibt die Verwendung von kationischem, acetalisiertem Polyvinylalkohol als Schutzkolloid bei der Emulsionspolymerisation. Die kationische Gruppe wird mittels polymeranaloger Umsetzung der Acetalgruppen mit einer kationischen Verbindung eingeführt. In der JP-A 2000-225768 wird die kationische Gruppe ebenfalls mittels polymeranaloger Umsetzung der Acetalgruppe eingeführt. Das Produkt dient zur Beschichtung von Inkjet-Papieren.

Nachteilig bei diesen Verfahren aus dem Stand der Technik ist die Anbindung der kationischen Gruppe über hydrolysempfindliche Ether-, Ester- oder Amido-Gruppen, sowie die Notwendigkeit eines zusätzlichen Verfahrensschrittes bei der polymeranalogen Reaktion. In der Acta Polymerica 43, 230-234 (1992) wird ein Verfahren zur Herstellung von kationischem Polyvinylacetal beschrieben, bei dem im ersten Schritt Vinylacetat mit Dimethyldiallylammoniumchlorid in wasserfreiem Methanol bei einem Festgehalt von 3 bis 4 Mol-% copolymerisiert wird. Das damit erhaltene Copolymer wird anschließend verseift und acetalisiert. Aufgrund des sehr niedrigen Umsatzes bei der Copolymerisation muß das Restmonomer durch mehrfaches Umfällen entfernt werden.

Es bestand daher weiter die Aufgabe das kationische Polyvinylacetal in einer möglichst hydrolysebeständigen Form zur Verfügung zu stellen, und mit einem Verfahren zugänglich zu machen, welches dessen großtechnische Herstellung ermöglicht.

Gegenstand der Erfindung ist ein Verfahren zur Herstellung von kationischen Polyvinylacetalen mittels Copolymerisation von einem oder mehreren kationischen Monomeren aus der Gruppe umfassend N-Alkyldiallylammoniumsalze mit einem oder mehreren Vinylestern von unverzweigten oder verzweigten Carbonsäuren mit 1 bis 15 C-Atomen, Verseifung der damit erhaltenen Copolymerisate zu Copolymerisaten mit ≥ 50 Mol-% Vinylalkohol-Einheiten, und Acetalisierung der Vinylalkohol-Einheiten mit einem oder mehreren aliphatischen Aldehyden mit 1 bis 15 C-Atomen oder deren Halbacetale und Vollacetale, dadurch gekennzeichnet, dass die Copolymerisation in einem Gemisch aus Wasser und einwertigem, aliphatischem Alkohol mit einem Wasseranteil von 2 bis 35 Gew.-% durchgeführt wird.
Geeignete Vinylester sind Vinylester von unverzweigten oder verzweigten Carbonsäuren mit 1 bis 15 C-Atomen. Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 5 bis 15 C-Atomen, beispielsweise VeoVa9^{R} oder VeoVa10^{R} (Handelsnamen der Firma Resolutions). Besonders bevorzugt ist Vinylacetat.

Neben den Vinylester-Einheiten können gegebenenfalls noch ein oder mehrere Monomere aus der Gruppe umfassend Methacrylsäureester und Acrylsäureester von Alkoholen mit 1 bis 15 C-Atomen, Olefine, Diene, Vinylaromaten und Vinylhalogenide copolymerisiert sein. Geeignete Monomere aus der Gruppe der Ester der Acrylsäure oder Methacrylsäure sind Ester von unverzweigten oder verzweigten Alkoholen mit 1 bis 15 C-Atomen. Bevorzugte Methacrylsäureester oder Acrylsäureester sind Methylacrylat, Methylmethacrylat, Ethylacrylat, Ethylmethacrylat, Propylacrylat, Propylmethacrylat, n-, iso- und t-Butylacrylat, n-, iso- und t-Butylmethacrylat, 2-Ethylhexylacrylat, Norbornylacrylat. Besonders bevorzugt sind Methylacrylat, Methylmethacrylat, n-, iso- und t-Butylacrylat, 2-Ethylhexylacrylat und Norbornylacrylat. Geeignete Diene sind 1,3-Butadien und Isopren. Beispiele für polymerisierbare Olefine sind Ethen und Propen. Als Vinylaromaten können Styrol und Vinyltoluol einpolymerisiert werden. Aus der Gruppe der Vinylhalogenide werden üblicherweise Vinylchlorid, Vinylidenchlorid oder Vinylfluorid, vorzugsweise Vinylchlorid, eingesetzt. Der Anteil dieser Comonomere wird so bemessen, dass der Anteil an Vinylestermonomer ≥ 50 Mol-% im Vinylester-Polymerisat beträgt.

Gegebenenfalls können noch weitere Hilfsmonomere in einem Anteil von vorzugsweise 0.01 bis 20 Gew.-%, bezogen auf das Gesamtgewicht der Comonomere, copolymerisiert werden. Beispiele hierfür sind ethylenisch ungesättigte Mono- und Dicarbonsäuren, vorzugsweise Crotonsäure, Acrylsäure, Methacrylsäure, Fumarsäure und Maleinsäure; ethylenisch ungesättigte Carbonsäureamide und -nitrile, vorzugsweise N-Vinylformamid, Acrylamid und Acrylnitril; auch cyclische Amide, die am Stickstoff eine ungesättigte Gruppe tragen, wie N-Vinylpyrrolidon; Mono- und Diester der Fumarsäure und Maleinsäure wie die Diethyl-, und Diisopropylester sowie Maleinsäureanhydrid, ethylenisch ungesättigte Sulfonsäuren bzw. deren Salze, vorzugsweise Vinylsulfonsäure, 2-Acrylamido-2-methyl-propansulfonsäure. Ferner sind als Hilfsmonomere geeignet Vinylether, Vinylketone, weitere vinylaromatische Verbindungen, die auch Heteroatome besitzen können.

Geeignete Hilfsmonomere sind auch polymerisierbare Silane bzw. Merkaptosilane. Bevorzugt sind γ-Acryl- bzw. γ-Methacryloxy-propyltri(alkoxy)silane, α-Methacryloxymethyltri(alkoxy)silane, γ-Methacryloxypropyl-methyldi(alkoxy)silane, Vinylalkyl-di(alkoxy)silane und Vinyltri(alkoxy)silane, wobei als Alkoxygruppen beispielsweise Methoxy-, Ethoxy-, Methoxyethylen, Ethoxyethylen-, Methoxypropylenglykolether- bzw. Ethoxypropylenglykolether-Reste eingesetzt werden können. Weitere Beispiele sind funktionalisierte (Meth)acrylate, insbesondere epoxyfunktionelle wie Glycidylacrylat, Glycidylmethacrylat, Allylglycidether, Vinylglycidether, oder Hydroxyalkyl-funktionelle wie Hydroxyethyl(meth)acrylat, oder substituierte oder unsubstituierte Aminoalkyl(meth)acrylate. Weitere Beispiele sind vorvernetzende Comonomere wie mehrfach ethylenisch ungesättigte Comonomere, beispielsweise Divinyladipat, Diallylmaleat, Allylmethacrylat, Butandioldiacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid, N-Methylolallylcarbamat, Alkylether wie der Isobutoxyether oder Ester des N-Methylolacrylamids, des N-Methylolmethacrylamids und des N-Methylolallylcarbamats.

Bevorzugte kationische Monomere sind Diallyldialkylammoniumhalogenide mit C₁- bis C₄-Alkylresten. Am meisten bevorzugt wird Diallyldimethylammoniumchlorid (DADMAC). Im allgemeinen wird das kationische Comonomer in einem Anteil von 0.01 bis 10 Gew.-%, vorzugsweise 0.5 bis 5 Gew.-%, am meisten bevorzugt 3 bis 5 Gew.-%, jeweils bezogen auf das Gesamtgewicht der Comonomere des Vinylester-Festharzes, copolymerisiert.

Die Polymerisation erfolgt in einem Gemisch aus Wasser und einwertigem, aliphatischem Alkohol, mit einem Wasseranteil von 2 bis 35 Gew.-%, vorzugsweise 4 bis 20 Gew.-%. Geeignete Alkohole sind Alkanole mit C₁- bis C₆-Alkylrest. Bevorzugt werden Methanol, Ethanol und iso-Propanol.

Die Polymerisation wird unter Rückfluß bei einer Temperatur von 40°C bis 100°C durchgeführt und durch Zugabe gängiger Initiatoren radikalisch initiiert. Beispiele für gängige Initiatoren sind Azoinitiatoren, oder Percarbonate wie Cyclohexylperoxidicarbonat, oder Perester wie t-Butylperneodecanoat oder t-Butylperpivalat, sowie Peroxide wie t-Butylhydroperoxid. Die Einstellung des Molekulargewichts kann in bekannter Weise durch Zugabe von Regler, durch den Lösungsmittelgehalt, durch Variation der Initiatörkonzentration und durch Variation der Temperatur erfolgen. Nach Abschluß der Polymerisation wird das Lösungsmittel sowie gegebenenfalls überschüssiges Monomer und Regler abdestilliert.

Die Verseifung der Vinylester-Copolymerisate erfolgt in an sich bekannter Weise, zum Beispiel nach dem Band- oder Kneterverfahren, im Alkalischen oder Sauren, unter Zugabe von Säure oder Base. Vorzugsweise wird das kationische Vinylester-Festharz in Alkohol, beispielweise Methanol, unter Einstellen eines Feststoffgehalts von 10 bis 80 Gew.-% aufgenommen. Bevorzugt wird die Hydrolyse im Basischen durchgeführt, beispielsweise durch Zugabe von NaOH, KOH oder NaOCH₃. Die Base wird im allgemeinen in einer Menge von 1 bis 5 Mol-% pro Mol Ester-Einheiten eingesetzt. Die Hydrolyse wird bei Temperaturen von 25°C bis 80°C durchgeführt. Nach Abschluß der Hydrolyse wird das Lösungsmittel abdestilliert und das verseifte Vinylester-Copolymerisat als Pulver erhalten. Das verseifte Vinylester-Copolymerisat kann aber auch durch eine sukzessive Zugabe von Wasser, während das Lösungsmittel abdestilliert wird, als wässrige Lösung gewonnen werden.

Als vollverseifte Vinylester-Copolymerisate bezeichnet man dabei solche Polymerisate, deren Hydrolysegrad ≥ 96 Mol-% ist. Als teilverseifte Vinylester-Copolymerisate sind solche zu verstehen, mit einem Hydrolysegrad ≥ 50 Mol-% und < 96 Mol-%. Die teil- oder vollverseiften Vinylester-Copolymerisate haben vorzugsweise einen Hydrolysegrad von 50 Mol-% bis 99.9 Mol-%, besonders bevorzugt von 70 Mol-% bis 99.9 Mol-%, am meisten bevorzugt von 96 Mol-% bis 99.9 Mol-%. Die Viskosität des Vinylester-Copolymerisats (DIN 53015, Methode nach Höppler; 4 %-ige Lösung in Wasser) beträgt 1 bis 40 mPas, vorzugsweise 1 bis 6 mPas, und dient als Maß für das Molekulargewicht und für den Polymerisationsgrad.

Die Acetalisierung erfolgt mit einem oder mehreren Aldehyden aus der Gruppe umfassend aliphatischer und aromatischer Aldehyde mit 1 bis 15 C-Atomen. Bevorzugte Aldehyde aus der Gruppe der aliphatischen Aldehyde mit 1 bis 15 C-Atomen sind Formaldehyd, Acetaldehyd, Propionaldehyd und am meisten bevorzugt Butyraldehyd, oder eine Mischung aus Butyraldehyd und Acetaldehyd. Als aromatische Aldehyde können beispielsweise Benzaldehyd oder dessen Derivate verwendet werden. Der Acetalisierungsgrad beträgt 1 bis 80 Mol-%, in den bevorzugten Bereichen 1 bis 25 Mol-% und 40 bis 80 Mol-%.

Zur Acetalisierung werden die verseiften Vinylester-Copolymerisate vorzugsweise in wässrigem Medium aufgenommen. Üblicherweise wird ein Festgehalt der wässrigen Lösung von 5 bis 30 % eingestellt. Die Acetalisierung erfolgt in Gegenwart von sauren Katalysatoren wie Salzsäure, Schwefelsäure, Salpetersäure oder Phosphorsäure. Vorzugsweise wird durch Zugabe von 20 %-iger Salzsäure der pH-Wert der Lösung auf Werte < 1 eingestellt.

Nach Zugabe des Katalysators wird die Lösung auf vorzugsweise -10°C bis +30°C abgekühlt. Die Acetalisierungsreaktion wird durch Zugabe des Aldehyds gestartet. Die Zugabemenge richtet sich dabei nach dem erwünschten Acetalisierungsgrad. Die Acetalisierung wird nach Abschluß der Zugabe des Aldehyds durch Erwärmen des Ansatzes auf 20°C bis 60°C und mehrstündiges Rühren, vorzugsweise 1 bis 6 Stunden vervollständigt, und das pulverförmige Reaktionsprodukt durch Filtration und nachgeschaltetem Waschschritt isoliert. Zur Stabilisierung können ferner Alkalien zugesetzt werden. Während der Fällung und der Nachbehandlung kann mit Emulgatoren gearbeitet werden, um die wässrige Suspension des kationischen Polyvinylacetals zu stabilisieren.

Mit der erfindungsgemäßen Verfahrensweise werden kationische Polyvinylacetale zugänglich, welche gegenüber den bisher bekannten Polyvinylacetalen eine deutlich bessere Haftung auf kritischen Substraten besitzen, so dass auf die Zugabe von Haftvermittlern verzichtet werden kann.

Vor allem in der Druckfarbenindustrie besteht Bedarf an Bindemitteln mit möglichst guter Haftung auf flexiblen Folien unterschiedlicher Polymere, um damit Druckfarben zur Verfügung stellen zu können, die nach dem Applizieren sehr fest mit dem Substrat verbunden sind und damit nur sehr schwer vom bedruckten Substrat abzulösen sind. Aufgrund der hervorragenden Haftung der kationischen Polyvinylacetale, deren günstigen Wechselwirkungen mit Pigmenten und der sich damit auch ergebenden vorteilhaften (Druckfarben-)Rheologie eignen sich diese insbesondere zur Verwendung in Druckfarbenzusammensetzungen.

Geeignete Druckfarbenformulierungen sind dem Fachmann bekannt und enthalten im allgemeinen 5 bis 25 Gew.-% Pigmentanteil, beispielsweise Disazo- oder Phthalocyanin-Pigmente, 5 bis 25 Gew.-% Polyvinylacetal-Bindemittel und Lösungsmittel, beispielsweise Alkohole wie Ethanol oder Ester wie Ethylacetat. Gegebenenfalls können noch weitere Zusatzstoffe wie Verzögerer, Weichmacher und andere Additive, wie beispielsweise Füllstoffe oder Wachse, enthalten sein. Haftvermittler sind nicht mehr zwingend erforderlich.

Auch für Verbundsicherheitsglas und Glasverbunde, Hochsicherheitsglas oder Scheibenfolien sind die kationischen Polyvinylacetale sehr gut geeignet, da neben einer nochmals verbesserten Haftung auf Glas auch eine höhere Reissfestigkeit erzielt werden kann. Der Einsatz anderer Polymerfolien bei diesen Anwendungen, wie PET-Folien, ist ebenfalls zu empfehlen, da die kationischen Polyvinylacetale und die daraus hergestellte Folien neben der Glasoberfläche auch auf der Oberfläche dieser anderen Polymerfolien sehr gut haften, so dass die Zugabe von Haftvermittlern überflüssig wird.

Des Weiteren dienen die kationischen Polyvinylacetale als Schutzkolloid, beispielsweise für wässrige Dispersionen und bei der Polymerisation in wässrigem Medium, und bei der Herstellung von in Wasser redispergierbaren Dispersionspulvern. Die kationischen Polyvinylacetale können ferner in Lacken auf wässriger Basis oder auf Basis von organischen Lösungsmitteln Verwendung finden. Weitere Einsatzgebiete der kationischen Polyvinylacetale sind die Verwendung als Bindemittel in Korrosionsschutzmitteln, wobei als Vorteile die bessere Haftung zu nennen ist. Darüberhinaus sind die kationischen Polyvinylacetale auch als Bindemittel in der Keramikindustrie, speziell als Binder für keramische Grünkörper, geeignet. Zu nennen ist auch der Einsatz als Bindemittel für Keramikpulver und Metallpulver im Spritzguß (powder injection molding) und als Bindemittel für die Innenbeschichtung von Dosen.

Die nachfolgenden Beispiele dienen zur weiteren Erläuterung der Erfindung, ohne diese in irgendeiner Weise einzuschränken:
Herstellung der Vinylacetatcopolymerisate:

### Beispiel 1 (5 Gew.-% DADMAC)

Vorlage:
14.1 g DADMAC (64 %-ig in Wasser)
580.7 g Methanol
1.36 g tert.-Butylperoxypivalat (75 %-ig in Wasser)
171.2 g Vinylacetat

Lösung 1:
1040 g Vinylacetat

Lösung 2:
85.79 g DADMAC (64 %-ig in Wasser)

Lösung 3:
99.47 g Methanol
11.70 g tert.-Butylperoxypivalat (75 %-ig in Wasser)

Die Vorlage wurde unter Stickstoff und Rühren (95 UpM) aufgeheizt und unter Rückfluss auf 60°C bis 65°C erhitzt. Nach 15 Minuten wurden 2.18 g tert.-Butylperoxypivalat (PPV) zugesetzt. Nach 45 Minuten wurden die 3 Lösungen in den Reaktor dosiert (Dosierzeit 225 min). 30 min nach Dosierende wurden 0.273 g tert.-Butylperoxypivalat dem Reaktor zugesetzt und noch für weitere 2 Stunden bei Rückfluss gerührt und anschließend die Polymerlösung abgekühlt. Es wurde eine klare Polymerlösung erhalten.

### Beispiel 2 (5 Gew.-% DADMAC):

Wie Beispiel 1, mit dem Unterschied, dass die Initiatormenge von 0.9 Gew.-% auf 0.45 Gew.-%, bezogen auf Monomer, reduziert wurde.

### Beispiel 3 (5 Gew.-% DADMAC):

Wie Beispiel 1, mit dem Unterschied, dass die Initiatormenge von 0.9 Gew.-% auf 0.2 Gew.-%, bezogen auf Monomer, reduziert wurde

### Beispiel 4 (8 Gew.-% DADMAC):

Vorlage:
22.54 g DADMAC (64 %-ig in Wasser)
563.9 g Methanol
0.68 g tert.-Butylperoxypivalat (75 %-ig in Wasser)
165.87 g Vinylacetat

Lösung 1:
1010 g Vinylacetat

Lösung 2:
137.3 g DADMAC (64 %-ig in Wasser)

Lösung 3:
97.35 g Methanol
5.85 g tert.-Butylperoxypivalat (75 %-ig in Wasser)

Die Vorlage wurde unter Stickstoff und Rühren (95 UpM) aufgeheizt und unter Rückfluss auf 60°C bis 65°C erhitzt. Nach 15 Minuten wurden 1.09 g tert.-Butylperoxypivalat (PPV) zugesetzt. Nach 45 Minuten wurden die 3 Lösungen in den Reaktor dosiert (Dosierzeit 225 Minuten). 30 min nach Dosierende wurden 0.136 g tert.-Butylperoxypivalat dem Reaktor zugesetzt und noch für weitere 2 Stunden bei Rückfluss gerührt und anschließend die Polymerlösung abgekühlt. Es wurde eine klare Polymerlösung erhalten.

### Beispiel 5 (3 Gew.-% DADMAC):

Wie Beispiel 2, aber mit 3 Gew.-% DADMAC. Es wurde eine klare Polymerlösung erhalten.

### Vergleichbeispiel 6 (12 Gew.-% DADMAC):

Wie Beispiel 2, aber mit 12 Gew.-% DADMAC. Es wurde eine klare Polymerlösung erhalten.

### Vergleichbeispiel 7 (ohne DADMAC):

Wie Beispiel 2, aber ohne DADMAC. Es wurde eine klare Polymerlösung erhalten.

### Vergleichbeispiel 8 (8 Gew.-% DADMAC):

Wie Beispiel 4, aber anstatt 563.9 g Methanol in der Vorlage, wurden 353.9 g Methanol und 210 g Wasser (Wasseranteil von 9 auf 38 Gew.-% erhöht) als Lösungmittel verwendet. Es wurde eine trübe Polymerlösung erhalten.

### Verseifung:

Die erhaltenen Harzlösungen wurden jeweils mit folgender Rezeptur zum Polyvinylalkohol verseift:
1544 g einer auf 34 Gew.-% Festgehalt eingestellten Harzlösung wurden mit 105 g Methanol überschichtet.
   Dann wurde nach Zugabe von 117 g einer 4.8 %-igen methanolischen NaOH-Lösung bei 30°C mit dem Rühren (200 UpM) begonnen. Nach 120 Minuten wurde die Verseifung mit Essigsäure (Einstellen auf pH 7) abgebrochen.
   Das ausgefallene Vinylalkoholcopolymer wurde abfiltriert, mit Methanol gewaschen und getrocknet.

### Acetalisierung:

Die gemäß der (Vergleichs)beispiele 1 bis 7 erhaltenen Harzlösungen wurden nach deren Verseifung jeweils mit folgender Rezeptur mit Butyraldehyd acetalisiert:
In einer Vorlage aus 950 ml vollentsalztem Wasser wurden 950 ml einer 10 %-igen Lösung des Vinylalkohol-Copolymers und 507 ml HCl (20 %-ig) bei einer Rührerdrehzahl von 420 UpM gerührt und auf -3°C abgekühlt. Dann wurden über 45 Minuten 101.5 ml Butyraldehyd zudosiert. Nach den 45 Minuten Dosierzeit wurde die Suspension weitere 40 Minuten bei -3°C gehalten, bevor sie dann in 105 Minuten auf 25°C aufgeheizt wurde. Bei dieser Temperatur wurde 90 Minuten ausreagiert. Danach wurde die Suspension filtriert und mit vollentsalztem Wasser mehrmals ausgewaschen und getrocknet.

Es wurden folgende Produkte erhalten:
PVB 1:
   Höpplerviskosität (DIN 53015, 10 %-ig in Ethanol) 14.9 mPa.s
PVB 2:
   Höpplerviskosität (DIN 53015, 10 %-ig in Ethanol) 22.6 mPa.s
PVB 3:
   Höpplerviskosität (DIN 53015, 10 %-ig in Ethanol) 32.9 mPa.s
PVB 4:
   Höpplerviskosität (DIN 53015, 10 %-ig in Ethanol) 19.8 mPa.s
PVB 5:
   Höpplerviskosität (DIN 53015, 10 %-ig in Ethanol) 17.0 mPa.s
Vergleichsbeispiel PVB 6:
   Höpplerviskosität (DIN 53015; 10 %-ig) nicht möglich
Vergleichsbeispiel PVB 7:
   Höpplerviskosität (DIN 53015, 10 %-ig in Ethanol) 16.0 mPa.s

### Herstellung von Druckfarben:

Aus den Polyvinylbutyralen wurden jeweils ein Firnis hergestellt, welcher gemäß DIN 53211 eine Auslaufzeit von 40 Sekunden im DIN-Becher (Düse 4 mm) aufweist. Dann wurden jeweils 20.8 Gewichtsteile Firnis mit 21.7 Gewichtsteilen eines Lösemittelgemisches aus Ethanol und Methoxypropanol (4 : 1 Gew.-Teile) und 7.5 Gewichtsteilen Pigment (Irgalith Rubin 4BGL, Irgalith Blau GLO) in einem Disperser über 60 Minuten vermischt.

### Rheologische Messung:

Die Rheologie wurde nach einem Tag mittels eines Kegel-Platte-Rheometers bei folgenden Einstellungen vermessen: Durchmesser 50 mm, Winkel 1°. Aufwärtskurve und Abwärtskurve jeweils von 0.2/sec bis 1000/sec während einer Minute. Gemessen wurde die Viskosität bei einem Schergefälle von D = 10/s, D = 100/s, D = 1000/s und die Aufwärtskurve bei D_{A} = 10/s.

Die Ergebnisse sind in nachfolgender Tabelle zusammengefasst:

| Irg. Blau GLO | Vbsp.7 | PVB 1 | PVB 2 | PVB 3 | PVB 4 | PVB 5 |
|---|---|---|---|---|---|---|
| D=10/s | 1280 | 305 | 247 | 62 | 172 | 496 |
| D=100/s | 219 | 175 | 114 | 51 | 106 | 155 |
| D=1000/s | 67 | 68 | 58 | 45 | 61 | 69 |
| D_{A}=10/s | 258 | 112 | 100 | 61 | 91 | 131 |
| D_{Ab}/D_{Auf} 10/s | 5.0 | 2.7 | 2.5 | 1.0 | 1.9 | 3.7 |

| Irg. Rubin 4BGL | Vbsp.7 | PVB 1 | PVB 2 | PVB 3 | PVB 4 | PVB 5 |
|---|---|---|---|---|---|---|
| D=10/s | 2420 | 391 | 315 | 198 | 618 | 496 |
| D=100/s | 337 | 327 | 267 | 122 | 215 | 155 |
| D=1000/s | 97 | 103 | 86 | 72 | 88 | 69 |
| D_{A}=10/s | 366 | 186 | 210 | 159 | 187 | 131 |
| D_{Ab}/D_{Auf} 10/s | 6.6 | 2.1 | 1.5 | 1.3 | 3.3 | 3.7 |

Die Ergebnisse zeigen, dass nichtfunktionalisiertes Polyvinylbutyral (Vbsp. 7) zu deutlich höheren Viskositäten führt, als die mit DADMAC funktionalisierten Polyvinylbutyrale aus Beispiel 1 bis 5. Darüber hinaus erhält man nur mit den mit DADMAC funktionalisierten Polyvinylbutyralen eine deutlich geringere Thixotropieneigung in den Auf- und Abwärtskurven (D_{Ab}/D_{Auf} 10/s).

Bei zu hohen Konzentrationen an DADMAC (Vbsp 6; 12 Gew.-% DADMAC) bleibt das Copolymer nach der Acetalisierung wasserlöslich. In diesem Fall konnte das Produkt nicht als Suspension isoliert und gereinigt werden. Wasserlösliche Polyvinylbutyrale können nur mit teuren Verfahren wie Dialyse, Aktivkohle oder Ionenaustauscher gereinigt werden. Weiterhin wird die Wasserbeständigkeit der Polyvinylbutyrale ab einer bestimmten DADMAC-Konzentration deutlich schlechter.

## Patentansprüche

1. Verfahren zur Herstellung von kationischen Polyvinylacetalen mittels Copolymerisation von einem oder mehreren kationischen Monomeren aus der Gruppe umfassend N-Alkyldiallylammoniumsalze mit einem oder mehreren Vinylestern von unverzweigten oder verzweigten Carbonsäuren mit 1 bis 15 C-Atomen, Verseifung der damit erhaltenen Vinylester-Copolymerisate zu Copolymerisaten mit ≥ 50 Mol-% Vinylalkohol-Einheiten, und Acetalisierung der Vinylalkohol-Einheiten mit einem oder mehreren aliphatischen Aldehyden mit 1 bis 15 C-Atomen oder deren Halbacetale und Vollacetale, **dadurch gekennzeichnet, dass** die Copolymerisation in einem Gemisch aus Wasser und einwertigem, aliphatischem Alkohol mit einem Wasseranteil von 2 bis 35 Gew.-% durchgeführt wird.

2. Verfahren nach Anspruch 1, **dadurch gekennzeichnet, dass** als kationisches Monomer ein Diallyldialkylammoniumhalogenid mit C₁- bis C₄-Alkylresten copolymerisiert wird.

3. Verfahren nach Anspruch 1, **dadurch gekennzeichnet, dass** als kationisches Monomer Diallyldimethylammoniumchlorid copolymerisiert wird.

4. Verfahren nach Anspruch 1 bis 3, **dadurch gekennzeichnet, dass** das kationische Monomer in einem Anteil von 0.01 bis 10 Gew.-%, bezogen auf das Gesamtgewicht der Comonomere des Vinylester-Copolymerisats, copolymerisiert wird.

5. Verfahren nach Anspruch 1 bis 4, **dadurch gekennzeichnet, dass** die Polymerisation in einem Gemisch aus Wasser und einem einwertigem, aliphatischem Alkohol mit C₁- bis C₆₋Alkylrest erfolgt.

6. Verwendung der Verfahrensprodukte nach Anspruch 1 bis 5 in Druckfarbenzusammensetzungen.

7. Verwendung der Verfahrensprodukte nach Anspruch 1 bis 5 als Bindemittel in Korrosionsschutzmitteln.

8. Verwendung der Verfahrensprodukte nach Anspruch 1 bis 5 als Bindemittel in der Keramikindustrie, speziell als Binder für keramische Grünkörper

9. Verwendung der Verfahrensprodukte nach Anspruch 1 bis 5 als Bindemittel für Keramikpulver und Metallpulver im Spritzguß.

10. Verwendung der Verfahrensprodukte nach Anspruch 1 bis 5 als Bindemittel für die Innenbeschichtung von Dosen, gegebenenfalls in Kombination mit Vernetzern wie Epoxidharzen.

11. Verwendung der Verfahrensprodukte nach Anspruch 1 bis 5 in Glasverbunden.

## Geänderte Patentansprüche

### Geänderte Patentansprüche gemäss Regel 86(2) EPÜ.

**1.** Verfahren zur Herstellung von kationischen Polyvinylacetalen mittels Copolymerisation von einem oder mehreren kationischen Monomeren aus der Gruppe umfassend N-Alkyldiallylammoniumsalze mit einem oder mehreren Vinylestern von unverzweigten oder verzweigten Carbonsäuren mit 1 bis 15 C-Atomen, Verseifung der damit erhaltenen Vinylester-Copolymerisate zu Copolymerisaten mit ≥ 50 Mol-% Vinylalkohol-Einheiten, und Acetalisierung der Vinylalkohol-Einheiten mit einem oder mehreren aliphatischen Aldehyden mit 1 bis 15 C-Atomen oder deren Halbacetale und Vollacetale, **dadurch gekennzeichnet, dass** die Copolymerisation in einem Gemisch aus Wasser und einwertigem, aliphatischem Alkohol mit einem Wasseranteil von 2 bis 35 Gew.-% durchgeführt wird, und dass das kationische Monomer in einem Anteil von 0.01 bis 10 Gew.-%, bezogen auf das Gesamtgewicht der Comonomere des Vinylester-Copolymerisats, copolymerisiert wird.

**2.** Verfahren nach Anspruch 1, **dadurch gekennzeichnet, dass** als kationisches Monomer ein Diallyldialkylammoniumhalogenid mit C₁- bis C₄-Alkylresten copolymerisiert wird.

**3.** Verfahren nach Anspruch 1, **dadurch gekennzeichnet, dass** als kationisches Monomer Diallyldimethylammoniumchlorid copolymerisiert wird.

**4.** Verfahren nach Anspruch 1 bis 3, **dadurch gekennzeichnet, dass** die Polymerisation in einem Gemisch aus Wasser und einem einwertigem, aliphatischem Alkohol mit C₁- bis C₆₋Alkylrest erfolgt.

**5.** Verwendung der Verfahrensprodukte nach Anspruch 1 bis 4 in Druckfarbenzusammensetzungen.

**6.** Verwendung der Verfahrensprodukte nach Anspruch 1 bis 4 als Bindemittel in Korrosionsschutzmitteln.

**7.** Verwendung der Verfahrensprodukte nach Anspruch 1 bis 4 als Bindemittel in der Keramikindustrie, speziell als Binder für keramische Grünkörper

**8.** Verwendung der Verfahrensprodukte nach Anspruch 1 bis 4 als Bindemittel für Keramikpulver und Metallpulver im Spritzguß.

**9.** Verwendung der Verfahrensprodukte nach Anspruch 1 bis 4 als Bindemittel für die Innenbeschichtung von Dosen, gegebenenfalls in Kombination mit Vernetzern wie Epoxidharzen.

**10.** Verwendung der Verfahrensprodukte nach Anspruch 1 bis 4 in Glasverbunden.
